# EUROPEAN PATENT APPLICATION

(11) **EP 4 687 110 A1**
(43) Date of publication of application: **04.02.2026**
(21) Application number: 25192005.4
(22) Date of filing: 25.07.2025
(51) Int. Cl.: G06V 10/25, G06F 40/279, G06V 10/20, G06V 10/26, G06V 10/75, G06V 10/74, G06V 10/764, G06V 30/19, G06V 30/413, G06F 40/295, G06V 30/414

(54) **IMAGE PROCESSING APPARATUS**

(30) Priority: 29.07.2024 JP 2024122208
(71) Applicant: KYOCERA Document Solutions Inc., Osaka-shi, Osaka 540-8585 (JP)
(72) Inventor: DU, Zhouning, 540-8585 Osaka-shi, Osaka (JP); TAKI, Kosuke, 540-8585 Osaka-shi, Osaka (JP)
(74) Representative: Heuer, Wilhelm

(57) **Abstract**

An image processing apparatus (100) includes an image reading portion (2), a control portion (10), and a storage portion (101). The storage portion (101) stores dictionary data (DD) in which, for one kind of item, a plurality of different similar item names are defined. The control portion (10) detects, from image data, a first region expected to individually include either a region of an item name or a region of an item value. For all the similar item names, the control portion (10) calculates their degree of character string similarity to a partial character string obtained by dividing the character string in the first region into substrings and, if the degree of character string similarity of any similar item name to the partial character string is equal to or higher than a threshold value, judges the first region as the region of the item name.

## Description

### BACKGROUND

The present disclosure relates to image processing apparatuses.

Some known image processing apparatuses read a personal identification card as a document and mask, out of the image data obtained by the reading, a region corresponding to personal information.

For example, the personal information on the personal identification card is classified into a plurality of items. Those items include name, address, and the like. With such personal identification cards, there may be cases where, out of the image data obtained by reading them, only a region corresponding to a specified item needs to be masked. The region that needs to be masked varies from one user to another.

### SUMMARY

According to one aspect of the present disclosure, an image processing apparatus includes an image reading portion, a control portion, and a storage portion. The image reading portion reads a document that contains a plurality of sets of item names and item values with respect to items related to personal information. The control portion recognizes a target item which is, among the items, an item to be masked and that, by performing a masking process on the image data obtained through the reading of the document by the image reading portion, generates masked data in which at least part of a region of the target item present in the image data is masked. The storage portion stores, for each of different kinds of item, dictionary data in which, for that one kind of item, a plurality of different similar item names are previously defined. The control portion performs a first region detection process to detect, from the image data, a first region expected to individually include either a region of an item name or a region of an item value. The control portion also performs a character recognition process to recognize a character string in the first region. The control portion further performs an item name region recognition process, as a process performed for each of a plurality of first regions, to calculate, for all the similar item names, their degree of character string similarity to a partial character string obtained by dividing the character string in the first region of the process target into substrings to judge, if the degree of character string similarity of any of the similar item names to the partial character string is equal to or higher than a threshold value, the first region of the process target to be the region of the item name.

### BRIEF DESCRIPTION OF THE DRAWINGS

Fig. 1 is a schematic diagram of a multifunction peripheral according to an embodiment.
Fig. 2 is a block diagram of the multifunction peripheral according to the embodiment.
Fig. 3 is a diagram schematically showing one example of a personal identification card that can be a target of reading on the multifunction peripheral according to the embodiment.
Fig. 4 is a flow chart showing the procedure of a masking job performed on the multifunction peripheral according to the embodiment.
Fig. 5 is a diagram showing first regions in the image data obtained by reading the personal identification card shown in Fig. 3.
Fig. 6 is a diagram showing second regions in the image data obtained by reading the personal identification card shown in Fig. 3.
Fig. 7 is a diagram showing masked data generated in a masking job performed with the personal identification card shown in Fig. 3 as the target.
Fig. 8 is a conceptual diagram of dictionary data used in the masking job on the multifunction peripheral according to the embodiment.
Fig. 9 is a flow chart showing the procedure of a region discrimination process performed on the multifunction peripheral according to the embodiment.
Fig. 10 is a flow chart showing the procedure of an exception process performed on the multifunction peripheral according to the embodiment.

### DETAILED DESCRIPTION

### <Construction of a Multifunction Peripheral>

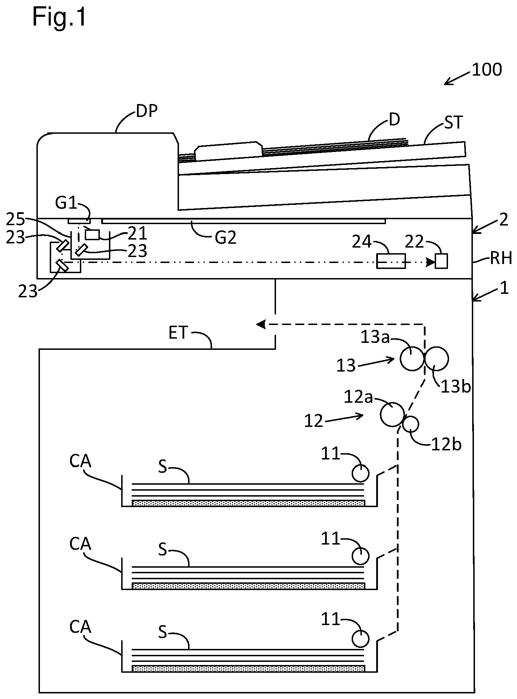

With reference to Figs. 1 to 10, an image processing apparatus according to one embodiment of the present disclosure will be described, taking as an example a multifunction peripheral 100 having a plurality of kinds of function such as scanning, printing, and data transmission.

As shown in Fig. 1, the multifunction peripheral 100 (corresponding to an "image processing apparatus") includes a printing portion 1. The printing portion 1 constitutes the main unit of the multifunction peripheral 100. The printing portion 1 prints an image on a sheet S. The printing portion 1 employs an electrophotographic printing method. This, however, is not meant as any limitation. The printing portion 1 can employ an inkjet printing method.

The printing portion 1 forms an image based on image data fed in to the multifunction peripheral 100. The printing portion 1 also conveys the sheet S along a sheet conveyance passage. The printing portion 1 prints the image on the sheet S being conveyed. In Fig. 1, the sheet conveyance passage is indicated by a broken line.

The printing portion 1 includes a sheet feed roller 11. The sheet feed roller 11 lies in contact with the sheet S stored in a sheet cassette CA and rotates in that state. Thus the sheet feed roller 11 feeds the sheet S from the sheet cassette CA to the sheet conveyance passage.

The printing portion 1 includes an image forming portion 12. The image forming portion 12 includes a photosensitive drum 12a and a transfer roller 12b. The photosensitive drum 12a carries a toner image on its circumferential surface. The transfer roller 12b lies in pressed contact with the photosensitive drum 12a to form a transfer nip with the photosensitive drum 12a. The transfer roller 12b rotates together with the photosensitive drum 12a. The image forming portion 12, while conveying the sheet S having entered the transfer nip, transfers the toner image to the sheet S.

The image forming portion 12 further includes, though not shown, a charging device, an exposure device, and a development device. The charging device electrostatically charges the circumferential surface of the photosensitive drum 12a. The exposure device forms an electrostatic latent image on the circumferential surface of the photosensitive drum 12a. The development device develops the electrostatic latent image on the circumferential surface of the photosensitive drum 12a into a toner image.

The printing portion 1 includes a fixing portion 13. The fixing portion 13 includes a heating roller 13a and a pressing roller 13b. The heating roller 13a incorporates a heater (not shown). The pressing roller 13b lies in pressed contact with the heating roller 13a to form a fixing nip with the heating roller 13a. The pressing roller 13b rotates together with the heating roller 13a. The fixing portion 13, while conveying the sheet S having entered the fixing nip, fixes the toner image transferred to the sheet S to the sheet S. The sheet S having left the fixing nip is discharged to a discharge tray ET.

The multifunction peripheral 100 also includes an image reading portion 2. The image reading portion 2 is disposed in an upper part of the main unit of the multifunction peripheral 100. In a job involving the reading of a document D, the document D is set on the image reading portion 2. The image reading portion 2 reads the document D set on it to generate the image data of the read document D.

The image reading portion 2 includes contact glasses G1 and G2. The contact glasses G1 and G2 are provided in the housing RH of the image reading portion 2. The housing RH has an opening in its top face. The contact glasses G1 and G2 are fitted in the opening in the top face of the housing RH.

The image reading portion 2 includes a document conveying device DP. The document conveying device DP is fitted to the housing RH. The document conveying device DP pivots such that, as seen from in front of the multifunction peripheral 100, a front part of the document conveying device DP swings up and down about a rear part of it as a pivot point. The document conveying device DP opens and closes relative to the top face of the housing RH.

The document conveying device DP has a set tray ST on which the document D is set. The document conveying device DP conveys the document D set on the set tray ST onto the contact glass G1.

In a feed-reading mode, the user sets the document D on the set tray ST. The document D automatically conveyed onto the contact glass G1 by the document conveying device DP (in other words, the document D passing over the contact glass G1) is read. On the other hand, in a stationary reading mode, the user sets the document D on the contact glass G2 and the document D on the contact glass G2 is read.

The image reading portion 2 includes a light source 21, an image sensor 22, a mirror 23, and a lens 24. The light source 21, the image sensor 22, the mirror 23, and the lens 24 are provided in the housing RH. The image reading portion 2 carries out scanning operation in which it shines light from the light source 21 to the contact glass G1 or G2 and performs photoelectric conversion with the image sensor 22.

The light source 21 has a plurality of LED elements. The plurality of LED elements are arrayed in a row along a main scanning direction (the direction perpendicular to the plane of Fig. 1). The image sensor 22 has a plurality of photoelectric conversion elements lined up along the main scanning direction. The mirror 23 reflects light toward the lens 24. The lens 24 collects the light reflected from the mirror 23 to direct it to the image sensor 22.

The light source 21 and the mirror 23 are provided on a carriage 25 that is movable along a sub (subsidiary) scanning direction (in Fig. 1, the left-right direction) orthogonal to the main scanning direction. As the carriage 25 moves along the sub scanning direction, the reading line of the image reading portion 2 moves along the sub scanning direction.

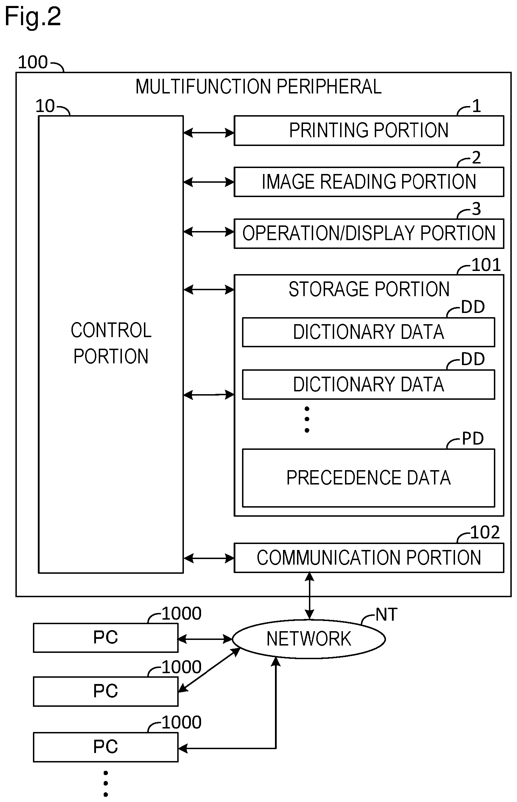

As shown in Fig. 2, the multifunction peripheral 100 includes an operation/display portion 3. The operation/display portion 3 is an operation panel having a touch screen. The operation/display portion 3 displays software buttons, messages, and the like on the touch screen. The operation/display portion 3 also has a plurality of hardware buttons. The operation/display portion 3 accepts operations from the user. Through the operation/display portion 3 the user can do the setting of various jobs including a masking job, which will be described later.

The multifunction peripheral 100 includes a control portion 10. The control portion 10 includes a CPU, an ASIC, a memory, and the like. The control portion 10 includes an image processing circuit. The control portion 10 performs various kinds of image processing on image data. The control portion 10 also controls the printing on the sheet S by the printing portion 1 and the reading of the document D by the image reading portion 2.

The control portion 10 also controls the operation/display portion 3. Specifically, the control portion 10 controls display operation on the touch screen. The control portion 10 senses operations on the software buttons and the hardware buttons. Based on the operations that the operation/display portion 3 accepts from the user, the control portion 10 performs the setting of a job.

The multifunction peripheral 100 includes a storage portion 101. The storage portion 101 is a non-volatile storage device. As the storage portion 101, a HDD, an SSD, and the like can be used. The storage portion 101 is connected to the control portion 10. The control portion 10 writes information to, and reads information from, the storage portion 101.

The storage portion 101 previously stores predetermined information. For example, the storage portion 101 previously stores a character recognition program. Based on the character recognition program the control portion 10 performs a character recognition process such as an OCR (optical character recognition) process. The control portion 10 takes the image data obtained through the reading of the document D by the image reading portion 2 as the target of the character recognition process.

The multifunction peripheral 100 includes a communication portion 102. The communication portion 102 is an interface that permits an external device to be connected to the multifunction peripheral 100 so that communication is possible between them. The communication portion 102 includes a communication circuit, a communication memory, a communication connector, and the like. The communication portion 102 is connected to the control portion 10. Using the communication portion 102 the control portion 10 exchanges data with the external device.

The communication portion 102 is connected to the external device across a network NT such as a LAN and the Internet so that communication is possible between them. Thought not shown, the communication portion 102 can be connected directly to the external device across a communication cable. The external device connected to the communication portion 102 can be, for example, a personal computer 1000 (in the following description referred to as the PC 1000) that is used by the user of the multifunction peripheral 100. Any external device other than the PC 1000 can be connected to the multifunction peripheral 100 so that communication is possible between them. Connecting the PC 1000 to the multifunction peripheral 100 permits the image data of the document D obtained through the reading of the document D by the image reading portion 2 to be transmitted to the image reading portion 2. The image data of the document D can then be stored on the PC 1000.

### <Outline of a Masking Job>

When making a contract for a product or a service, a prospective purchaser is often required to register his or her personal information. This is merely one example and many other various occasions require the registration of personal information. Example of personal information include name, address, and date of birth.

The user of the multifunction peripheral 100 assumes the task of registering personal information. When registering personal information, the user reads a personal identification card using the scanning function of the multifunction peripheral 100. Many kinds of personal identification card can be the target and they vary from one state, field, or the like to another. Examples of personal identification cards include driving licenses, health insurance cards, student identification cards, and passports.

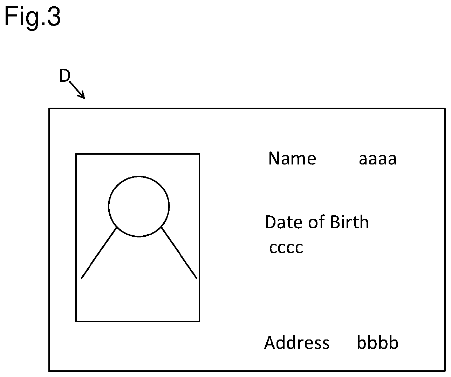

One example of a personal identification card is schematically shown in Fig. 3. The personal identification card bears personal information in a form classified into a plurality of items. Specifically, the personal identification card bears a plurality of sets of item names and item values with respect to items related to personal information. In the example shown in Fig. 3, the character string "Name" corresponds to an item name and the character string "aaaa" corresponds to the item value of the item corresponding to the item name "Name." Likewise, the character string "Address" corresponds to an item name and the character string "bbbb" corresponds to the item value of the item corresponding to the item name "Address." Likewise, the character string "Date of Birth" corresponds to an item name and the character string "cccc" corresponds to the item value of the item corresponding to the item name "Date of Birth."

When the personal identification card shown in Fig. 3 is read, the image data obtained through the reading of the personal identification card contains a character region including the character string "Name" indicating an item name and a character region including the character string "aaaa" indicating an item value. It also contains a character region including the character string "Address" indicating an item name and a character region including the character string "bbbb" indicating an item value. It further contains a character region including the character string "Date of Birth" indicating an item name and a character region including the character string "cccc" indicating an item value.

In the following description, wherever distinction is needed among the different character regions, the character region of the item name "Name" is identified by the reference sign C11 and the character region of the item value "aaaa" is identified by the reference sign C12; the character region of the item name "Address" is identified by the reference sign C21 and the character region of the item value "bbbb" is identified by the reference sign C22; and the character region of the item name "Date of Birth" is identified by the reference sign C31 and the character region of the item value "cccc" is identified by the reference sign C32.

After the personal identification card is read on the multifunction peripheral 100, an image based on the image data of the personal identification card obtained by the reading (i.e., the personal information on the personal identification card) is printed on a sheet S. The sheet S having the personal information printed on it is then stored. In this way, personal information is registered. Instead, the image data itself (i.e., electronic data) of the personal identification card can be stored.

Here, there may be cases where personal information has to be masked partly. For example, while a personal identification card has a field for date of birth, a contract for a product or a service may not require it. In this example, personal information related to date of birth may have to be masked. For another example, depending on the country, while a personal identification card has a field for religion, personal information related to religion is prohibited from being recorded. In this example, personal information related to religion may have to be masked.

For example, it is widely practiced to manually black out personal information to be masked to conceal it. The user however finds it troublesome to manually mask part of personal information.

To cope with that, the multifunction peripheral 100 is provided with a masking function. In other words, the multifunction peripheral 100 can execute a job involving the masking function (in the following description referred to simply as a masking job).

By using the masking function one can obtain masked data, that is, image data in which part of the personal information on a personal identification card is masked. An image based on the masked data can then be printed on a sheet S, or the masked data can be transmitted to the PC 1000 to be stored on it.

When a masking job is executed, its setting is done. In the setting of a masking job, what personal information to mask can be set freely.

After the setting of a masking job, the user sets a personal identification card as a document D on the image reading portion 2. In that state the user makes a starting operation for the masking job on the operation/display portion 3. On sensing the starting operation made on the operation/display portion 3, the control portion 10 starts the masking job.

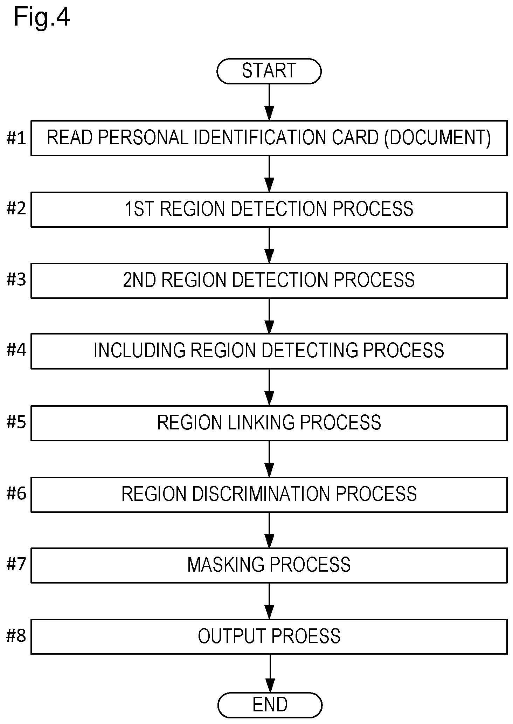

Now, with reference to the flow chart shown in Fig. 4, the procedure of the masking job will be described. The flow in Fig. 4 starts when the control portion 10 senses a starting operation for the masking job on the operation/display portion 3.

Before making the starting operation for the masking job, the user does the setting of the masking job. In the setting of the masking job, the user specifies a target item which is an item corresponding to an item value to be masked. When executing the masking job, the control portion 10 recognizes the target item specified by the user.

At Step #1, the control portion 10 makes the image reading portion 2 read the personal identification card as the document D. The image reading portion 2 reads the personal identification card to generate the image data of the read personal identification card (i.e., the scanning data of the personal identification card). The control portion 10 acquires the image data of the personal identification card obtained through the reading of the personal identification card by the image reading portion 2.

At Step #2, using a first learning model obtained through machine learning, the control portion 10 performs a first region detecting process. As the first region detecting process, the control portion 10 performs a process of detecting from the image data of the personal identification card a first region that is expected to individually include either a region of an item name or a region of an item value.

The first learning model for the first region detecting process is a learning model that is trained to detect a first region from the image data obtained through the reading of a personal identification card by the image reading portion 2. The first learning model is a trained model and is previously stored in the storage portion 101.

A personal identification card typically shows a plurality of pairs of item names and item values; thus, in the first region detecting process, a plurality of first regions are detected. So, if the first region detecting process ends in detecting no first region, or if the first region detecting process ends in detecting only one first region, the masking job can be terminated and a message prompting the user to check the document D on the image reading portion 2 can be displayed on the operation/display portion 3.

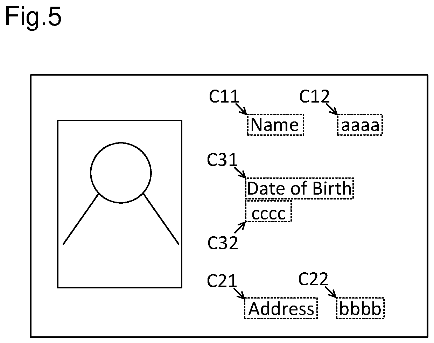

In the personal identification card shown in Fig. 3, the character region C11 of the item name "Name," the character region C12 of the item value "aaaa," the character region C21 of the item name "Address," the character region C22 of the item value "bbbb," the character region C31 of the item name "Date of Birth," and the character region C32 of the item value "cccc" are detected individually, each as a first region. The first regions are shown with emphasis in Fig. 5.

At Step #3, using a second learning model obtained through machine learning, the control portion 10 performs a second region detecting process. As the second region detecting process, the control portion 10 performs a process of detecting, from the image data of the personal identification card, a second region that is expected to include regions of both an item name and an item value corresponding to the same item.

The second learning model for the second region detecting process is a learning model trained to detect a second region from the image data obtained through the reading of a personal identification card by the image reading portion 2. The second learning model is a trained model and is previously stored in the storage portion 101.

In a case where a personal identification card has been read, the second region detecting process ends in detecting at least one second region. If the second region detecting process ends in detecting no second region, something different from a personal identification card may have been read. Accordingly, if the second region detecting process ends in detecting no second region, the masking job can be terminated and a message prompting the user to check the document D on the image reading portion 2 can be displayed on the operation/display portion 3.

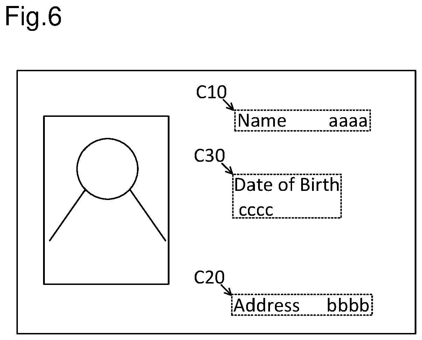

In the example shown in Fig. 5, the regions C10, C20, and C30 shown in Fig. 6 are detected as second regions. Specifically, one region C10 including the character region C11 of the item name "Name" and the character region C12 of the item value "aaaa" is detected as a second region; one region C20 including the character region C21 of the item name "Address" and the character region C22 of the item value "bbbb" is detected as a second region; and one region C30 including the character region C31 of the item name "Date of Birth" and the character region C32 of the item value "cccc" is detected as a second region.

At Step #4, for each of the plurality of first regions detected in the first region detecting process, the control portion 10 performs an including region detecting process. The plurality of first regions are each taken once as the target of the including region detecting process. The control portion 10 performs the including region detecting process for one first region as the process target and, on completing the including region detecting process for it, performs the including region detecting process for another first region not yet taken as the process target as the new process target.

As the including region detecting process, the control portion 10 performs a process of detecting a second region that includes the first region of the process target. To detect a second region that includes the first region of the process target, the control portion 10 detects a second region that has an image portion of which the degree of image similarity to the first region of the process target is equal to or more than a threshold value for the including region detecting process. The control portion 10 judges that a second region that has an image portion of which the degree of image similarity to the first region of the process target is equal to or more than the threshold value for the including region detecting process includes the first region. At this point, no character recognition process has yet been performed. That is, the degree of image similarity is the degree of similarly between two sets of image data, and is not the degree of similarity between character strings (between two sets of text data). The control portion 10 performs the including region detecting process, for example, by employing a known pattern matching technology. The threshold value for the including region detecting process is 70% or more, with no limitation intended.

In the example shown in Figs. 5 and 6, the second region C10 has an image portion of which the degree of image similarity to the first region C11 (the region of the item name "Name") is equal to or more than the threshold value and has an image portion of which the degree of image similarity to the first region C12 (the region of the item value "aaaa") is equal to or more than the threshold value. The second region C20 has an image portion of which the degree of image similarity to the first region C21 (the region of the item name "Address") is equal to or more than the threshold value and has an image portion of which the degree of image similarity to the first region C22 (the region of the item value "bbbb") is equal to or more than the threshold value. The second region C30 has an image portion of which the degree of image similarity to the first region C31 (the region of the item name "Date of Birth") is equal to or more than the threshold value and has an image portion of which the degree of image similarity to the first region C32 (the region of the item value "cccc") is equal to or more than the threshold value. Thus, the first regions C11 and C12 are judged to be included in the second region C10, the first regions C21 and C22 are judged to be included in the second region C20, and the first regions C31 and C32 are judged to be included in the second region C30.

At Step #5, the control portion 10 performs a region linking process. Specifically, the control portion 10 links together a plurality of first regions that are included in the same second region.

In the example shown in Figs. 5 and 6, the first regions C11 and C12 included in the second region C10 are linked together. The first regions C21 and C22 included in the second region C20 are linked together. The first regions C31 and C32 included in the second region C30 are linked together.

At Step #6, the control portion 10 performs a region discrimination process. By performing the region discrimination process, the control portion 10 recognizes, of the plurality of first regions linked together, which is a region of an item name and which is a region of an item value. In other words, by performing the region discrimination process, the control portion 10 discriminates between a region of an item name and a region of an item value. By performing region discrimination process the control portion 10 checks which of the plurality of regions linked together is a region of an item name and recognizes another first region linked with the one first region judged to be a region of an item name as a region of the item value.

In the example shown in Figs. 5 and 6, out of the second region C10, the first region C11 is judged to be a region of an item name and the first region C12 is judged to be a region of an item value. Out of the second region C20, the first region C21 is judged to be a region of an item name and the first region C22 is judged to be a region of an item value. Out of the second region C30, the first region C31 is judged to be a region of an item name and the first region C32 is judged to be a region of an item value.

By performing the region discrimination process, the control portion 10 recognizes the region of a target item. The region of a target item is a second region that includes both a first region corresponding to the item name of the target item and a first region corresponding to the item value of the target item. The region discrimination process will be described in detail later. Any other method can be used to recognize the region of a target item.

At Step #7, the control portion 10 performs a masking process to mask at least part of a target item present in the image data of the personal identification card. By performing the masking process, the control portion 10 generates masked data in which at least part of a region of a target item present in the image data of the personal identification card is masked.

The control portion 10 masks the first region linked with the region of the item name of the target item (i.e., the region of the item value of the target item). Or the control portion 10 masks both the regions of the item name and the item value of the target item. Substantially the entire second region corresponding to the target item can be masked.

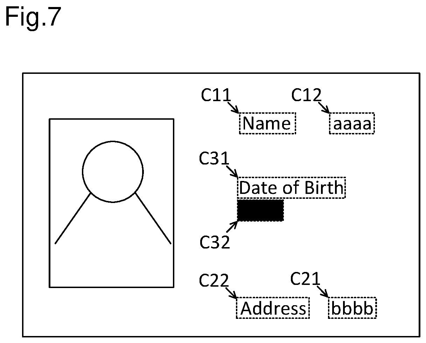

An example of masked data is shown in Fig. 7. The masked data shown in Fig. 7 is generated when the target item is date of birth. That is, at least the item value "cccc" corresponding to the item name "Date of Birth" is masked. Though not shown, both the item name "Date of Birth" and the item value "cccc" can be masked.

At Step #8, the control portion 10 makes an output portion perform an output process for the masked data. For example, in the setting of a masking job, an output method for masked data can be selected. The output method can be printing or transmission.

When printing is selected as the output method, the control portion 10 makes the printing portion 1 print (in other words, output) an image based on the masked data on a sheet S. In this case, the printing portion 1 corresponds to the "output portion" and the output destination is the sheet S.

When transmission is selected as the output method, the control portion 10 makes the communication portion 102 transmit (in other words, output) the masked data to the PC 1000. The masked data can be converted into PDF data and then transmitted to the PC 1000. Transmitting the masked data to the PC 1000 permits the masked data to be stored on the PC 1000. In this case, the communication portion 102 corresponds to the "output portion" and the output destination is the PC 1000.

In this embodiment, the first region detecting process, the second region detecting process, the including region detecting process, and the region linking process are performed. It is thus possible to accurately link together the regions of an item name and an item value corresponding to the same item in the image data of a personal identification card.

Owing to the regions of the item name and the item value corresponding to the same item in the image data of the personal identification card being linked together, it is easy to mask at least part of the target item. Specifically, it is sufficient to mask the region linked with the region of the item name of the target item. Doing so results in the item value of the target item being masked. With this configuration, it is easy, without transferring the image data of the personal identification card to a processing device on a cloud basis, to mask only the region corresponding to a user-specified item in the image data obtained through the reading of a document D (personal identification card).

If the region of an item value in the image data of a personal identification card can be masked, the personal information can be protected from leakage. Even if the region of the item name of a target item is masked, unless the region of the item value of the target item is masked, the personal information leaks. Thus, it is important to accurately perform a process of linking together the item name and the item value corresponding to the same item in the image data of the personal identification card.

Moreover, in this embodiment, the first region detecting process is performed using the first learning model and the second region detecting process is performed using the second learning model. Here, machine learning requires a huge amount of calculation and a huge amount of memory capacity. For this reason, processes related to machine learning are often performed on a processing device on a cloud basis. This, however, requires transfer of the image data of a personal identification card to the processing device on a cloud basis and is inconveniently susceptible to leakage of personal information.

To cope with that, in this embodiment, a first learning model that is trained is used and a second learning model that is trained is used. The first and second learning models are both previously stored in the storage portion 101. Thus, it is possible, without increasing the memory capacity within the multifunction peripheral 100, to perform the first and second region detecting processes within the multifunction peripheral 100. That is, there is no need to transfer the image data of a personal identification card to a processing device on a cloud basis.

### <Region Discrimination Process>

For each of a plurality of first regions (i.e., character regions containing character strings) present in the image data of a personal identification card, the control portion 10 performs a region discrimination process to check whether it is a region of an item name or a region of an item value. In the region discrimination process, dictionary data DD is used. The dictionary data DD is previously stored in the storage portion 101 (see Fig. 2).

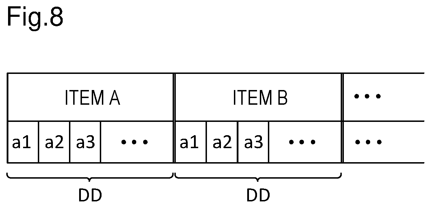

A conceptual diagram of the dictionary data DD is shown in Fig. 8. The dictionary data DD is data in which, for one kind of item, a plurality of different "similar items names" are previously defined. One set of dictionary data DD is previously created for each of a plurality of kinds of item. The storage portion 101 previously stores a plurality of sets of dictionary data DD that correspond to a plurality of kinds of item respectively. The plurality of sets of dictionary data DD are previously created by the manufacturer of the multifunction peripheral 100 and are previously stored in the storage portion 101. In Fig. 8, items are identified as A, B, .... Similar item names corresponding to item A are identified as a1, a2, a3, .... Similar item names corresponding to item B are identified as b1, b2, b3, ....

Take, for example, an identification number as an item. On one personal identification card, the character string "ID" can be used as the item name; on another personal identification card, the character string "Number" can be used as the item name; on yet another personal identification card, the character string "Num" can be used as the item name. Although these character strings differ from each other, all correspond to the same item. Accordingly, the dictionary data DD corresponding to an identification number as an item has previously defined in it the character string "ID," the character string "Number," the character string "Num," and the like.

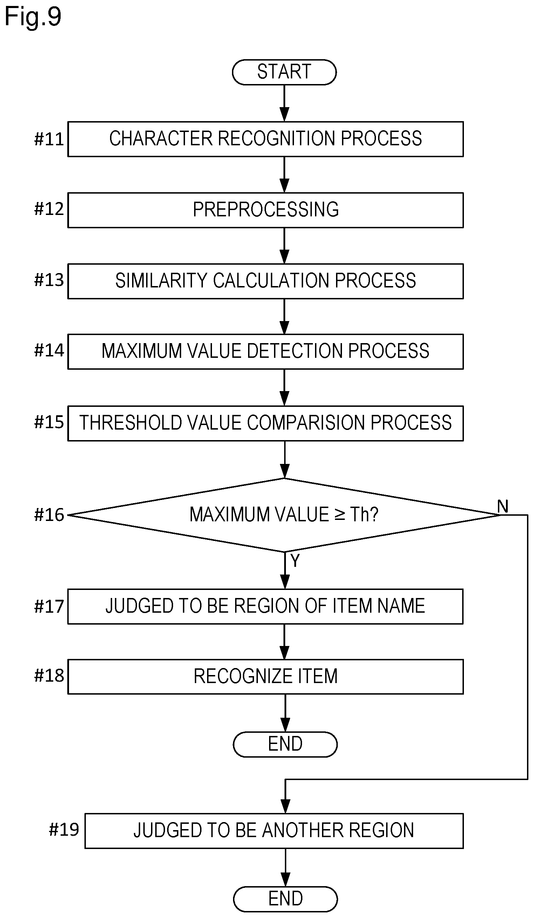

Now, with reference to the flow chart in Fig. 9, the procedure of the region discrimination process will be described. The flow in Fig. 9 starts when the control portion 10 completes the region linking process.

At Step #11, the control portion 10 performs a character recognition process on the image data of the personal identification card obtained through the reading of the personal identification card by the image reading portion 2 (i.e., the process at Step #1 in Fig. 4). The control portion 10 performs an OCR process on the image data of the personal identification card. Thus, from each of a plurality of first regions present in the image data of the personal identification card, the control portion 10 extracts a character string. The control portion 10 recognizes the character string in each of the plurality of first regions. Here, a first region contains a character string representing an item name or a character string representing an item value.

At Step #12, the control portion 10 performs preprocessing on the plurality of character strings extracted in the character recognition process. There is no particular limitation on what to perform as the preprocessing. For example, the control portion 10 performs as the preprocessing a process of reorganizing character strings into upper- or lower-case characters. After this process, upper- and lower-case characters in character strings are no longer distinguished. For another example, the control portion 10 performs as the preprocessing a process of removing spaces and predetermined symbols.

After the process at Step #12, the control portion 10 performs an item name region discrimination process. In performing the item name region discrimination process, the control portion 10 sets as the process target one of the plurality of first regions detected in the first region detecting process.

As one process in the item name region discrimination process, the control portion 10 performs a similarity calculation process (the process at Step #13). At Step #13, the control portion 10 calculates, for all the similar item names (their character strings) defined in the plurality of sets of dictionary data DD, their degree of similarity to a partial character string obtained by dividing the character string in the first region of the process target into substrings. In the following description, the degree of similarity between a similar item name and a partial character string in the first region is referred to as the degree of character string similarity for distinction from the degree of image similarity.

When performing the similarity calculation process, the control portion 10 selects one of the plurality of sets of dictionary data DD (here, the selected set of dictionary data DD is referred to as the target dictionary data DD). The control portion 10 also selects one of the plurality of similar item names defined in the target dictionary data DD (here, the selected similar item name is referred to as the target similar item name).

The control portion 10 then calculates the degree of character string similarity between the partial character string in the first region of the process target with the target similar item name. There is no particular limitation on the method for calculating the degree of character string similarity; it can be calculated using a first method, or using a second method. Any method different from the first and second methods can be used to calculate the degree of character string similarity. The degree of character string similarity ranges between a maximum value of "1" and a minimum value of "0." The higher the value of the degree of character string similarity, the higher the degree of similarity between the character strings compared.

In the similarity calculation process, if the target similar item name and the partial character string in the first region of the process target match, that is, if the target similar item name is included in the character string in the first region of the process target, the calculated degree of character string similarity is "1." By contrast, if the target similar item name and the partial character string in the first region of the process target do not match, that is, if the target similar item name is not included in the character string in the first region of the process target, the calculated degree of character string similarity has a value smaller than "1."

The first and second methods will be described one by one below, where, for easier understanding, the target similar item name is assumed to be "PC." The description will deal with cases where the character string in the first region of the process target is "PCabc" and "PoCabc" respectively.

### 1. First Method

The first method checks whether part of the character string in the first region of the process target (i.e., a partial character string) matches the target similar item name. In other words, the first method checks whether the target similar item name is included in the character string in the first region of the process target. If the character string in the first region of the process target is "PCabc," its partial character strings are, for example, "PC," "Ca," "PCa" and "abc." If the character string in the first region of the process target is "PoCabc," its partial character strings are, for example, "Po," "oC," "PoC," and "Cabc." These character strings are merely some examples.

Of the partial character strings in the first region of the process target, the character string "PC" matches the character string "PC" of the target similar item name. By contrast, of the partial character strings in the first region of the process target, the character strings other than "PC" do not match the character string "PC" of the target similar item name.

Accordingly, if the character string in the first region of the process target is "PCabc," the partial character string in the first region of the process matches the target similar item name. That is, the character string in the first region of the process target includes the target similar item name. By contrast, if the character string in the first region of the process target is "PoCabc," the partial character string in the first region of the process does not match the target similar item name. That is, the character string in the first region of the process target does not include the target similar item name.

In the similarity calculation process using the first method, if any partial character string in the first region of the process target matches the target similar item name, the degree of character string similarity is found as "1." By contrast, if none of the partial character strings in the first region of the process target matches the target similar item name, the degree of character string similarity is found as "0."

Thus, in the similarity calculation process using the first method, if the character string in the first region of the process target is "PCabc," the degree of character string similarity is found as "1." By contrast, if the character string in the first region of the process target is "PoCabc," the degree of character string similarity is found as "0."

### 2. Second Method

In the second method, each character in the character string in the first region of the process target is taken as a start-point character and, within the character string in the first region of the process target, a character string starting with the start-point character and containing as many characters as the number of characters in the target similar item name is taken as a partial character string. In addition, the number of characters that match between the target similar item name and the partial character string is counted as the number of matching characters N1. Then the value (= N1/N2) calculated by dividing the number of matching characters N1 by the number of characters N2 in the target similar item name is taken as the degree of character string similarity.

In the similarity calculation process using the second method, if the character string in the first region of the process target is "PCabc," starting with the head character the characters "P," "C," "a," and "b" are each taken as a start-point character. On the other hand, the number of characters in the target similar item name "PC" is "two (= N2)." Accordingly, the character strings "PC," "Ca," "ab," and "bc" are each taken as a partial character string.

In the character string "PCabc" in the first region of the process target, no character string that has the character "c" as a start-point character has two characters and thus the character "c" is not taken as a start-point character. If the number of characters in the target similar item name is three, not only the character "c" but also the character "b" is not taken as a start-point character.

With attention paid to the partial character string "PC" in the first region of the process target, the number of matching characters with the target similar item name "PC" is "2 (= N1)." In this case, the degree of character string similarity is "1 (= 2/2)." With attention paid to the partial character string "Ca" in the first region of the process target, the number of matching characters with the target similar item name "PC" is "1 (= N1)." In this case, the degree of character string similarity is "0.5 (= 1/2)." With attention paid to each of the partial character strings "ab" and "bc" in the first region of the process target, with either of them the number of matching characters with the target similar item name "PC" is "0 (= N1)." In this case, the degree of character string similarity is "0 (= 0/2)." Thus, if the character string in the first region of the process target is "PCabc," the degree of character string similarity between the partial character strings in the first region of the process target and the target similar item name is "1."

In the similarity calculation process using the second method, if the character string in the first region of the process target is "PoCabc," starting with the head character the characters "P," "o," "C," "a," and "b" are each taken as a start-point character. On the other hand, the number of characters in the target similar item name "PC" is "two (= N2)." Accordingly, the character strings "Po," "oC," "Ca," "ab," and "bc" are each taken as a partial character string.

With attention paid to each of the partial character strings "Po," "oC," and "Ca," with any of them the number of matching characters with the target similar item name "PC" is "1 (= N1)." In this case, the degree of character string similarity is "0.5 (= 1/2)." With attention paid to each of the partial character strings "ab" and "bc," with either of them the number of matching characters with the target similar item name "PC" is "0 (= N1)." In this case, the degree of character string similarity is "0 (= 0/2)." Thus, if the character string in the first region of the process target is "PoCabc," the degree of character string similarity between the partial character strings in the first region of the process target and the target similar item name is "0.5."

After calculating the degree of character string similarity between the partial character strings in the first region of the process target and the target similar item name, the control portion 10 newly selects an unselected similar item name out of the plurality of similar item names defined in the target dictionary data DD. The control portion 10 switches the target similar item name and calculates the degree of character string similarity between the partial character strings in the first region of the process target and the new target similar item name. For all of the plurality of similar item names defined in the target dictionary data DD, the control portion 10 calculates their degree of character string similarity to the partial character strings in the first region of the process target. The control portion 10 then memorizes, of the plurality of similar item names defined in the target dictionary data DD, the similar item name with the highest degree of character string similarity to the partial character strings in the first region of the process target in a form associated with the value of its degree of character string similarity.

Moreover, for all the similar item names defined in the plurality of sets of dictionary data DD, the control portion 10 calculates the degree of character string similarity to the partial character strings in the first region of the process target. That is, the control portion 10 newly selects an unselected set of dictionary data DD out of the plurality of sets of dictionary data DD. The control portion 10 switches the dictionary data DD and, for all of the plurality of similar item names defined in the new target dictionary data DD, the control portion 10 calculates the degree of character string similarity to the partial character strings in the first region of the process target. The control portion 10 then stores, of the plurality of similar item names defined in the target dictionary data DD, the similar item name with the highest degree of character string similarity to the partial character strings in the first region of the process target in a form associated with the value of its degree of character string similarity. In this way, a plurality of similar item names corresponding to a plurality of kinds of item respectively are stored one by one in a form associated with a value of the degree of character string similarity. In other words, a plurality of similarity values (which are values of the degree of character string similarity) respectively corresponding to a plurality of kinds of item are stored.

The control portion 10 performs, as one process in the item name region discrimination process, a maximum value detection process (the process at Step #14). At Step #14, the control portion 10 compares with each other the plurality of similarity values (which are values of the degree of character string similarity) calculated and stored in the similarity calculation process. In other words, the control portion 10 compares with each other a plurality of similarity values corresponding to a plurality of kinds of item respectively.

The control portion 10 then detects the maximum value of the degree of character string similarity (i.e., the highest similarity value). Specifically, the control portion 10 calculates the degree of character string similarity between the partial character strings in the first region of the process target and all the similar item names to detect the maximum value among the plurality of similarity values thus calculated.

The control portion 10 performs, as one process in the item name region discrimination process, a threshold value comparison process (the process at Step #5). At Step #15, the control portion 10 compares a prescribed threshold value for the item name region discrimination process with the maximum value of the degree of character string similarity.

For example, to set a threshold value for the item name region discrimination process, a personal identification card is actually read on the multifunction peripheral 100 and, for a character string present in the region of an item name in the image data obtained through the reading, the result of the similarity calculation process is acquired (here, the value acquired as that result will be referred to as the similarity value of an item name region). Moreover, for a character string present in a region different from a region of an item name in that image data, the result of the similarity calculation process is acquired (here, the value acquired as that result will be referred to as the similarity value of another region). Note that a plurality of similarity values of item name regions are acquired and a plurality of similarity values of other regions are acquired.

Also calculated are a first average value, which is the average value of the similarity values of a plurality of item name regions, and a second average value, which is the average value of a plurality of other regions. Then the average value of the first and second average values is taken as the threshold value for item name region discrimination process. There is no particular limitation on the method of setting the threshold value for the item name region recognition process; any other setting method can be used.

At Step #16, the control portion 10 checks whether the maximum value of the degree of character string similarity is equal to or more than the threshold value for the item name region discrimination process. In Fig. 9, the threshold value for the item name region discrimination process is represented by Th. If the control portion 10 judges that the maximum value of the degree of character string similarity is equal to or more than the threshold value for the item name region discrimination process, an advance is made to Step #17.

At Step #17, the control portion 10 judges the first region of the process target to be a region of an item name. That is, for all the similar item names defined in a plurality of sets of dictionary data DD, the control portion 10 calculates their degree of character string similarity to the partial character strings obtained by dividing the character string in the first region of the process target into substrings. Then, if the degree of character string similarity between any similar item name and the partial character strings in the first region of the process target is equal to or higher than a threshold value, the control portion 10 judges the first region of the process target to be a region of an item name.

At Step #18, the control portion 10 recognizes the item corresponding to the first region of the process target. Specifically, the control portion 10 takes as a candidate item, of all the similar item names defined in the plurality of sets of dictionary data DD, the item corresponding to the similar item name with the highest degree of character string similarity to the partial character strings in the first region of the process target. The control portion 10 then judges the candidate item to be the target item corresponding to the first region of the process target.

If at Step #16 the control portion 10 judges that the maximum value of the degree of character string similarity is less than the threshold value for the item name region discrimination process, an advance is made to Step #19. At Step #19, the control portion 10 judges that the first region of the process target is another region (i.e., a region other than a region of an item name).

The processes at Steps #13 to #19 are each performed as one process in the item name region discrimination process. After completion of the item name region discrimination process for the first region of a given process target, the control portion 10 checks whether there remains any first region for which the item name region discrimination process has not been performed (here referred to as an unprocessed first region). If any unprocessed first region remains, the control portion 10 sets the unprocessed first region as a new process target. That is, the control portion 10 switches process targets. Then the control portion 10 performs the item name region discrimination process (the processes at Steps #13 to #19) on the first region of the new process target.

In the embodiment, for each of a plurality of kinds of item, dictionary data DD in which for that one kind of item a plurality of different similar item names are previously defined is previously stored in the storage portion 101. Using the dictionary data DD, the item name region discrimination process is performed. It is thus possible, in a case where an item to which a plurality of item names correspond is the masking target, to prevent inconsistency in which, for a personal identification card that contains a particular item name among the plurality of item names, the masking target item is masked correctly while, for a personal identification card that contains another item name among them, the masking target item is not masked (in other words, the masking target item is not detected).

For example, suppose that an identification number as an item is the masking target. In that case, in the embodiment, for both a personal identification card that bears "ID" as an item name and a personal identification card that bears "Num" as an item name, the identification number is masked correctly. On the other hand, with the conventional configuration, inconsistency can occur in which, for a personal identification card that bears "ID" as an item name, the identification number is masked correctly while, for a personal identification card that bears "Num" as an item name, the identification number is not masked.

Suppressing such inconsistency requires large dictionaries. In addition, a method relying on a machine learning model requires a large-size model. Since available memory capacity is limited, the processing has to be done on a cloud basis.

In the embodiment, the use of dictionary data DD eliminates the need for processing on a cloud basis. That is, there is no need to transfer the image data of a personal identification card (i.e., personal information) to a processing device on a cloud basis. It is thus possible to prevent leakage of personal information. In other words, according to the embodiment, it is possible to easily mask only a region corresponding to an item specified by the user out of the image data obtained by reading a document D (personal identification card) without transferring the image data of the personal identification card to a processing device on a cloud basis.

In the embodiment, as the similarity calculation process (i.e., the process at Step #;13 in Fig. 9), a process of calculating the degree of character string similarity between partial character strings obtained by dividing the character string in the first region of the process target into substrings and similar item names is performed. This provides the following benefit.

For example, with a personal identification card such as a passport, the item name of a single item is given in two or more languages. Accordingly, the first region detection process (i.e., the process at Step #2 in Fig. 4) in a masking job for that type of personal identification card detects a region containing character strings in two or more languages as a first region. For example, a region of character strings that contains a Japanese character string and a Latin character string is detected as a first region.

In that case, a configuration that calculates, for the entire character string in the first region as the target, its degree of character string similarity to a similar item name yields a small value of the degree of character string similarity even if the character string in the first region is a character string representing a similar item name. This makes it impossible to perform the item name region recognizing process accurately.

By contrast, in the embodiment, a character string composed solely of Japanese characters is taken as a partial character string and the degree of character string similarity is calculated between that Japanese partial character string and the similar item name. Or, a character string composed solely of Latin characters is taken as a partial character string and the degree of character string similarity is found between that Latin partial character string and the similar item name. This increases the accuracy of the calculation of the degree of character string similarity. That is, it is possible to perform the item name region recognition process accurately.

In this way, the region corresponding to an item specified by the user can be detected accurately. Thus the region corresponding to the item specified by the user can be masked accurately. That is, it is possible to eliminate the inconvenience in which a region corresponding to an item specified by the user is not masked. It is also possible to eliminate the inconvenience in which a region other than a region corresponding to an item specified by the user is masked.

### <Exception Process>

When the first region of the process target is judged to be a region of an item name, the control portion 10 takes as a candidate item, of all the similar item names defined in the plurality of sets of dictionary data DD, an item corresponding to the similar item name with the highest degree of character string similarity to the partial character strings in the first region of the process target. If there is one such candidate item, the control portion 10 judges that candidate item to be the item corresponding to the first region of the process target. In this way the item corresponding to the first region of the process target can be recognized easily.

There may however be cases where a plurality of candidate items are found. For example, assume that character strings such as "address" are defined as similar item names for item A and character strings such as "dd" are defined as similar item names for item B different from item A. Assume in addition that, the personal identification card as the target of the masking job shows the character string "cardholder address" as an item name.

If this personal identification card is the target of the masking job, a region including the character string "cardholder address" is a first region. In the calculation of the degree of character string similarity between the similar item name "address" of item A and the partial character strings in the first region, of the character string "cardholder address," at least the character string "address" is a partial character string and thus the calculated degree of character string similarity is "1." In the calculation of the degree of character string similarity between the similar item name "dd" of item B and the partial character strings in the first region, of the character string "cardholder address," at least the character string "dd" is a partial character string and thus the calculated degree of character string similarity is "1." Thus, in this example, there are two candidate items.

When there are a plurality of candidate items as described above, the control portion 10 performs an exception process. By performing the exception process the control portion 10 limits the item corresponding to the first region of the process target to one.

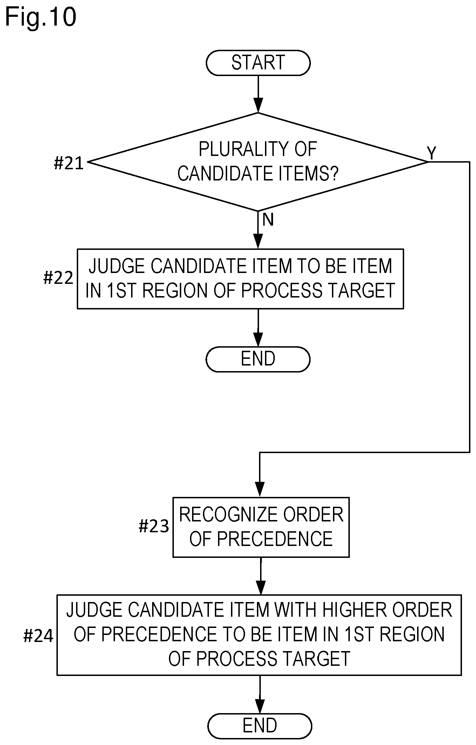

Now, with reference to the flow chart in Fig. 10, the procedure of the exception process will be described. As one process in the item recognition process at Step #18, the exception process is performed.

At Step #21, the control portion 10 checks whether there are a plurality of candidate items. If the control portion 10 judges that there are only one candidate item, an advance is made to Step #22. At Step #;22, the control portion 10 judges the candidate item to be the item corresponding to the first region of the process target.

If at Step #21 the control portion 10 judges that there is a plurality of candidate items, an advance is made to Step #23. At Step #23, based on precedence data PD in which the orders of precedence are defined for the plurality of items, the control portion 10 recognizes the orders of precedence (in other words, the degrees of importance) of the plurality of candidate items. The precedence data PD is previously prepared by the manufacturer of the multifunction peripheral 100 and stored in the storage portion 101 (see Fig. 2). When recognizing the order of precedence of each of the plurality of candidate items the control portion 10 refers to the precedence data PD.

Subsequently, an advance is made to Step #24. At Step #24, the control portion 10 judges that, of the plurality of candidate items, any candidate item with a higher order of precedence defined in the precedence data PD is the item corresponding to the first region of the process target.

Here, the degree of importance of personal information varies from one kind of personal information to another. For an item with a high degree of importance (here referred to as a high-importance item) it is essential to reliably prevent information leakage.

Inconveniently, there are cases where a region other than a region of a high-importance item is erroneously judged to be a region of a high-importance item, and also cases where a region of a high-importance item is erroneously judged to be another region.

If a region other than a region of a high-importance item is erroneously judged to be a region of a high-importance item, the region other than a region of a high-importance item can be masked unnecessarily. This unnecessary masking poses no problem from the perspective of information protection. On the other hand, if a region of a high-importance item is erroneously judged to be another region, an inconvenience arises where the region of the high-importance item, despite being the target of masking, is not masked. In other words, personal information with high importance can be leaked.

To cope with that, based on the respective degrees of importance of the plurality of items, the orders of precedence are determined for them. Thus, when there are a plurality of candidate items, of the plurality of candidate items, any candidate item with a higher degree of importance in terms of information leakage prevention is judged to be the item corresponding to the first region of the process target. It is thus possible to prevent leakage of personal information with high importance.

The embodiment disclosed herein should be understood to be in every aspect illustrative and not restrictive. The scope of the present disclosure is defined not by the description of the embodiment given above but by the appended claims.

## Claims

1. An image processing apparatus (100) comprising:
an image reading portion (2) that reads a document (D) that contains a plurality of sets of item names and item values with respect to items related to personal information;
a control portion (10) that recognizes a target item which is, among the items, an item to be masked and that, by performing a masking process on image data obtained through reading of the document (D) by the image reading portion (2), generates masked data in which at least part of a region of the target item present in the image data is masked; and
a storage portion (101),
wherein
the storage portion (101) stores, for each of different kinds of item, dictionary data (DD) in which, for that one kind of item, a plurality of different similar item names are previously defined,
the control portion (10) performs
a first region detection process to detect, from the image data, a first region expected to individually include either a region of an item name or a region of an item value,
a character recognition process to recognize a character string in the first region, and
an item name region recognition process, as a process performed for each of a plurality of first regions, to calculate, for all the similar item names, a degree of character string similarity thereof to a partial character string obtained by dividing the character string in the first region of a process target into substrings to judge, if the degree of character string similarity of any of the similar item names to the partial character string is equal to or higher than a threshold value, the first region of the process target to be the region of the item name.

2. The image processing apparatus (100) according to claim 1, wherein
if the first region of the process target is judged to be the region of the item name, the control portion (10) takes as a candidate item the item corresponding to the similar item name with a highest degree of character string similarity to the partial character string in the first region of the process target, and
if there is one candidate item, the control portion (10) judges the candidate item to be the item corresponding to the first region of the process target.

3. The image processing apparatus (100) according to claim 2, wherein
if there are a plurality of candidate items, the control portion (10) judges, of the plurality of candidate items, a candidate item of which a previously determined order of precedence is higher to be the item corresponding to the first region of the process target.

4. The image processing apparatus (100) according any one of claims 1 to 3, wherein
the control portion (10) performs
a second region detection process to detect, from the image data, a second region expected to include both the region of the item name and the region of the item value corresponding to a same item, and
a region linking process to link together a plurality of first regions included in a same second region, and
the control portion (10) recognizes, of the plurality of first regions, another first region linked with one first region judged to be the region of the item name as the region of the item value.

5. The image processing apparatus (100) according to any one of claims 1 to 4, further comprising an output portion (1, 102) that performs an output process for the masked data, wherein the output portion (1, 102) is at least one of
a printing portion (1) that, as the output process, prints an image based on the masked data on a sheet (S) and
a communication portion (102) that, as the output process, transmits the masked data to an external device (1000).
